# EUROPEAN PATENT APPLICATION

(11) **EP 4 465 507 A1**
(43) Date of publication of application: **20.11.2024**
(21) Application number: 24154571.4
(22) Date of filing: 30.01.2024
(51) Int. Cl.: H02K 15/06, H02K 15/085, H02K 3/28, H02K 15/04

(54) **AUTOMATIC WIRE INSERTING PROCESS FOR A FLAT WIRE STATOR**

(30) Priority: 17.05.2023 CN 202310557049
(71) Applicant: UPTEC Intelligent Manufacturing (Wuxi) Co., Ltd., Wuxi City, Jiangsu Province 214000 (CN)
(72) Inventor: YE, Xin, Wuxi City, Jiangsu Province 214000 (CN); ZHOU, Liangliang, Wuxi City, Jiangsu Province 214000 (CN); XU, Jianhai, Wuxi City, Jiangsu Province 214000 (CN); XU, Lei, Wuxi City, Jiangsu Province 214000 (CN); TANG, Shang, Wuxi City, Jiangsu Province 214000 (CN)
(74) Representative: Longoni, Alessandra

(57) **Abstract**

The present invention relates to an automatic wire inserting process for a flat wire stator, which includes the following steps: S1: arranging copper wires in sequence on multiple winding displacement toolings according to a quantity of layers and a quantity of slots of different stator winding structures; S2: conveying the multiple winding displacement toolings on which the copper wires are arranged to a wire coiling mechanism; S3: the wire coiling mechanism coils the copper wires arranged on the winding displacement tooling to a winding assembly in sequence, to form a preset winding structure; and S4: transferring and inserting the preset winding structure into the stator. The present invention is characterized with an advantage of an increased wire inserting speed.

## Description

### FIELD OF TECHNOLOGY

The present invention belongs to the field of automatic wire inserting technologies for a flat wire stator, and in particular, to an automatic wire inserting process for a flat wire stator.

### BACKGROUND

A hairpin permanent magnet synchronous motor is increasingly used in the domestic drive motor market on a large scale. Compared with a traditional wire-winded motor, because a hairpin copper wire is flat, at a same power, the motor has a smaller volume and higher power efficiency, which is a development direction of a next-generation new-energy driving motor. However, due to the complicated manufacturing process and difficulty in product design, there is currently no mature mass production line in the Chinese market.

In a motor production process, different copper wires need to be inserted into a stator to form a stator winding. However, when the copper wires are inserted, the copper wires are mainly inserted into wire slots of the stator one by one by using a wire inserting device. The copper wires cannot be arranged by using a winding displacement tooling as required. After the copper wires are winded by using a winding mechanism, the copper wires are inserted as a whole, so that the copper wires are inserted slowly, affecting production efficiency of a motor.

### SUMMARY

The present invention is intended to provide an automatic wire inserting process for a flat wire stator with an increased wire inserting speed, to overcome shortcomings of existing technologies.

The technical solutions of the present invention are as follows.

An automatic wire inserting process for a flat wire stator is provided, including the following steps:
S1: arranging copper wires in sequence on multiple winding displacement toolings according to a quantity of layers and a quantity of slots of different stator winding structures;
S2: conveying the multiple winding displacement toolings on which the copper wires are arranged to a wire coiling mechanism;
S3: coiling by way of the wire coiling mechanism the copper wires, arranged on the winding displacement tooling, to a winding assembly in sequence, to form a preset winding structure; and
S4: transferring and inserting the preset winding structure into the stator.

Further, when a stator winding has 48 slots on six layers, the copper wires are arranged in the following manner:
S1: arranging three copper wires A and three copper wires B alternately in sequence from right to left on a winding displacement tooling through first winding, where an interval between two straight segments of the copper wires A is spaced apart by six iron core slots, and an interval between two straight segments of the copper wires B is 4 iron core slots;
S2: overlapping and arranging 36 copper wires C in sequence from left to right on a winding displacement tooling through first winding, so that winding displacement of the winding displacement tooling through first winding is completed;
S3: overlapping and arranging 12 copper wires D in sequence from right to left on the winding displacement tooling through second winding, and after the copper wires D are arranged, overlapping and arranging 36 copper wires E in sequence from left to right on the winding displacement tooling through second winding, so that winding displacement of the winding displacement tooling through second winding is completed;
S4: according to arrangement manners for the copper wires D and copper wires E, arranging copper wires F and copper wires G on the winding displacement tooling through third winding, where a quantity of the copper wires G is the same as a quantity of the copper wires C; and
S5: arranging 12 copper wires H one by one on the winding displacement tooling through third winding, so that winding displacement of the winding displacement tooling through third winding is completed.

Further, the copper wires A, copper wires B, copper wires C, copper wires D, copper wires E, copper wires F, and copper wires G are all U-shaped hairpin copper wires, and the copper wires H are I-shaped copper wires.

Further, when the stator winding has 48 slots on six layers, and the wire coiling mechanism performs winding for one time, the copper wires A are winded from a slot 1 on a first layer of the stator and the winding stops at a slot 12 on the first layer, the copper wires B are winded from a slot 2 on the first layer and the winding stops at a slot 11 on the first layer, and there is no overlap between the copper wires A and copper wires B.

Further, the copper wires C are winded from a slot 13 on the first layer of the stator, copper wires C in a slot 19 to slot 48 overlap, and the overlapping copper wires C are respectively located on the first layer and a second layer of the stator, and copper wires C located in a slot 1 to slot 6 are disposed on the second layer of the stator.

Further, when the winding mechanism performs second winding, the copper wires D are winded from a slot 1 on a third layer of the stator, where copper wires D located in a slot 7 to slot 12 overlap, and the overlapping copper D wires are located on the second layer and third layer of the stator, and copper wires D located in a slot 13 to slot 18 are disposed on the second layer of the stator.

Further, the copper wires E are winded from a slot 13 on the third layer, copper wires E in a slot 19 to slot 48 overlap, and the overlapping copper wires E are respectively located on the third layer and a fourth layer of the stator, and copper wires E located in a slot 1 to slot 6 are disposed on the fourth layer of the stator.

Further, when the winding mechanism performs third winding, copper wires F are winded from a slot 1 on a fifth layer of the stator, copper wires F in a slot 7 to slot 12 overlap, and the overlapping copper wires are respectively located on a fourth layer and the fifth layer of the stator, and copper wires F located in a slot 13 to slot 18 are disposed on the fourth layer of the stator.

Further, the copper wires G are winded from a slot 13 on a fifth layer of the stator, the winding stops at a sixth slot on a sixth layer, the copper wires G located in a slot 19 to a slot 48 overlap, the overlapping copper wires G are respectively located on the fifth layer and the sixth layer of the stator, copper wires G located in the slot 1 to slot 6 are disposed on the sixth layer of the stator, the copper wires H are winded from a slot 7 on the sixth layer, and the winding stops at a slot 18 on the sixth layer.

Further, the wire coiling mechanism includes the winding displacement tooling disposed on a stator wire coiling device and configured to arrange flat copper wires, a winding mechanism configured to wind the arranged flat copper wires, a flat copper wire conveying mechanism, and a tooling conveying mechanism;
the tooling conveying mechanism is configured to convey the winding displacement tooling to the winding mechanism; and
the flat copper wire conveying mechanism is configured to convey, to the winding mechanism for winding, the flat copper wires arranged on the winding displacement tooling conveyed to the winding mechanism.

Compared with the prior art, the present invention has the following beneficial effects.
1. According to the present invention, the copper wires are arranged according to different stator winding structures, and a preset winding structure is winded and formed by using the wire coiling mechanism, to help form the stator winding.
2. According to the present invention, the copper wires A, the copper wires B, the copper wires C, the copper wires D, the copper wires E, the copper wires F, the copper wires G, and the copper wires H are arranged for three times, the copper wires are winded as preset windings by using the wire coiling mechanism, and the preset windings are inserted into the stator, thereby implementing automatic wire inserting.

In summary, the present invention is characterized with an advantage of an increased wire inserting speed.

### BRIEF DESCRIPTION OF THE DRAWINGS

FIG. 1 is a structural diagram of a winding of the present invention after first wire coiling;
FIG. 2 is a structural diagram of a winding of the present invention after second wire coiling;
FIG. 3 is a structural diagram of a winding of the present invention after third wire coiling;
FIG. 4 is a structural diagram of the present invention after molding;
FIG. 5 is a schematic diagram of a winding position of the present invention after first wire coiling;
FIG. 6 is a schematic diagram of a winding position of the present invention after second wire coiling;
FIG. 7 is a schematic diagram of a winding position of the present invention after third wire coiling;
FIG. 8 is a schematic structural diagram of copper wires of the present invention;
FIG. 9 is a schematic structural diagram of a winding displacement tooling of the present invention;
FIG. 10 is a schematic three-dimensional diagram of a structure of the present invention;
FIG. 11 is a schematic three-dimensional diagram of a combination state of a cable routing part and a conducting wire part in the present invention;
FIG. 12 is a schematic three-dimensional diagram of a combination state of a tooling, a wire coiling part, a wire movement assembly, and a conducting wire block in the present invention;
FIG. 13 is a schematic three-dimensional diagram of a wire coiling part in the present invention;
FIG. 14 is a schematic three-dimensional diagram of a wire-holding assembly in the present invention;
FIG. 15 is a schematic three-dimensional diagram of a combination state of a winding assembly and a cover plate in the present invention;
FIG. 16 is a schematic three-dimensional diagram of a state in which an umbrella-shaped member and an insert are separated from a sleeve in the present invention;
FIG. 17 is a schematic sectional view of a three-dimensional part of a locking assembly in the present invention;
FIG. 18 is a schematic three-dimensional diagram of a lifting part in the present invention;
FIG. 19 is a schematic three-dimensional diagram of a positioning part in the present invention;
FIG. 20 is a schematic three-dimensional diagram of a separation structure between a hollow speed reducer, a sleeve, and a servo motor in the present invention;
FIG. 21 is a schematic diagram of a winding displacement tooling of the present invention through first winding;
FIG. 22 is a schematic diagram of a winding displacement tooling of the present invention through second winding; and
FIG. 23 is a schematic diagram of a winding displacement tooling of the present invention through third winding.

In the figure, 1, wire body; 10, fastening support; 11, sliding groove; 12, servo motor; 13, hollow speed reducer; 2. winding displacement tooling; 3, cable routing part; 30, first assembly base; 31, first cylinder; 32, second cylinder; 33, wire movement assembly; 34, sliding plate; 35, baffle plate; 36, first motor; 37, conveying belt; 4, conducting wire part; 40, second assembly base; 41, third cylinder; 42, conducting wire block; 43, fourth cylinder; 5, wire coiling part; 50, mounting base; 51, fifth cylinder; 52, fourth driving mechanism; 53, slot; 54, sliding base; 55, winding assembly; 56, rotating shaft; 57, sleeve; 58, insert; 59, umbrella-shaped member; 6, lifting part; 60, sliding rail; 61, sliding plate; 62, horizontally disposed plate; 63, positioning rod; 64, rack; 65, third motor; 66, first gear; 67, sixth cylinder; 7, positioning part; 70, fastening plate; 71, seventh cylinder; 72, eighth cylinder; 73, movable block; 74, alignment block; 8, wire-holding assembly; 80, base; 81, tenth cylinder; 82, eleventh cylinder; 83, first swing arm; 84, second swing arm; 85, driving gear; 86, driven gear; 87, belt; 9, locking assembly; 90, ninth cylinder; 91, steel ball; 92, adapter; 93, sliding sleeve; 101, U-shaped Hairpin copper wire; 102; I-shaped copper wire.

### DESCRIPTION OF THE EMBODIMENTS

The following clearly and completely describes technical solutions in embodiments of the present invention with reference to accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention as claimed.

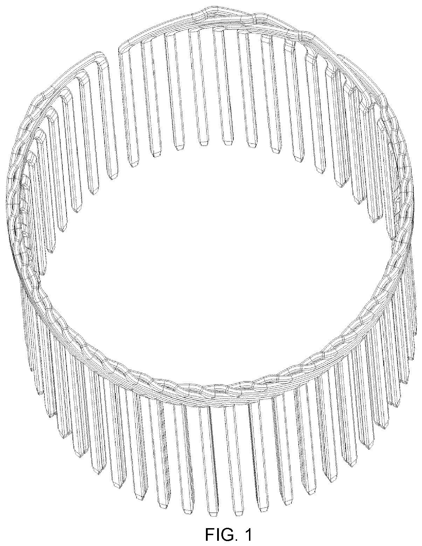

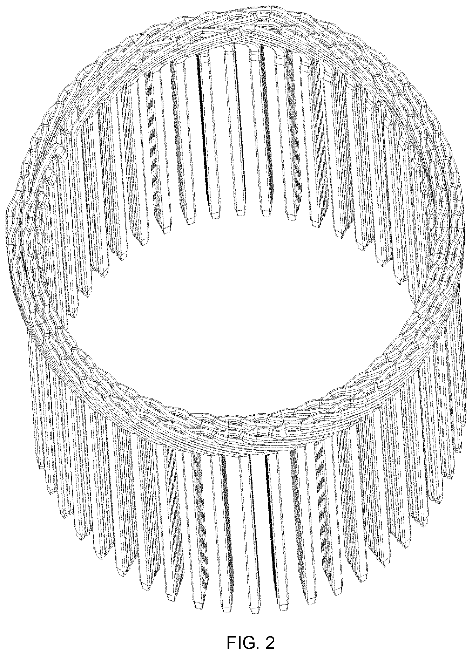

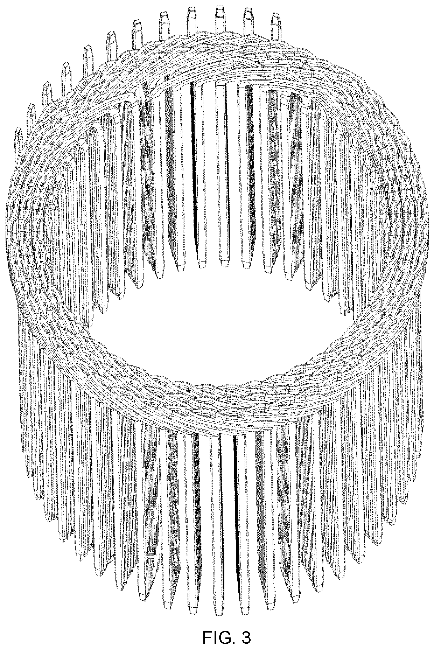

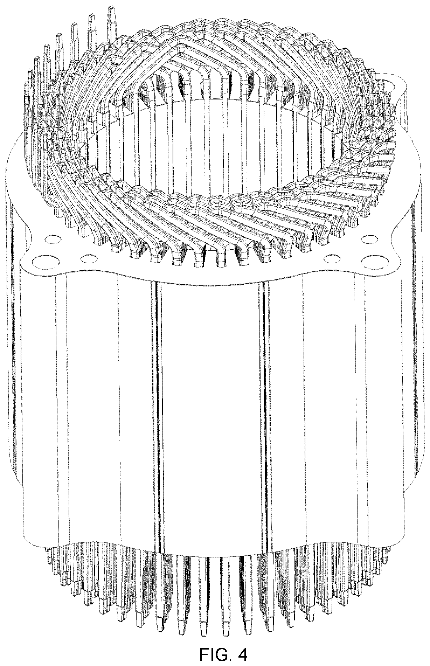

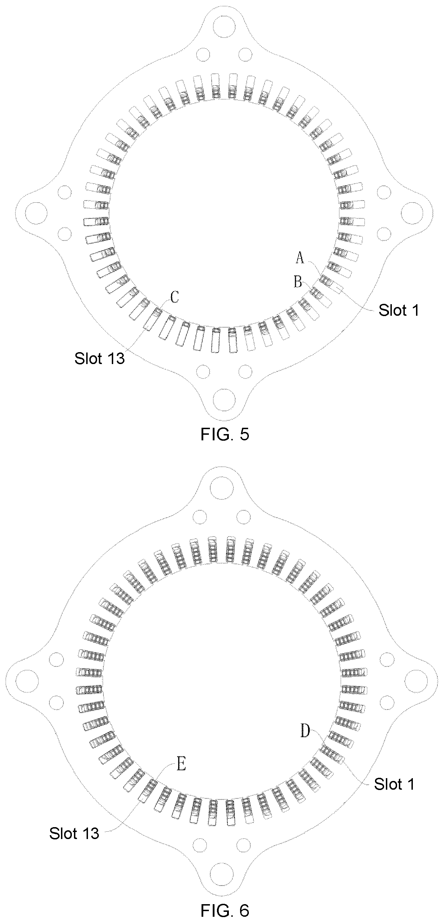

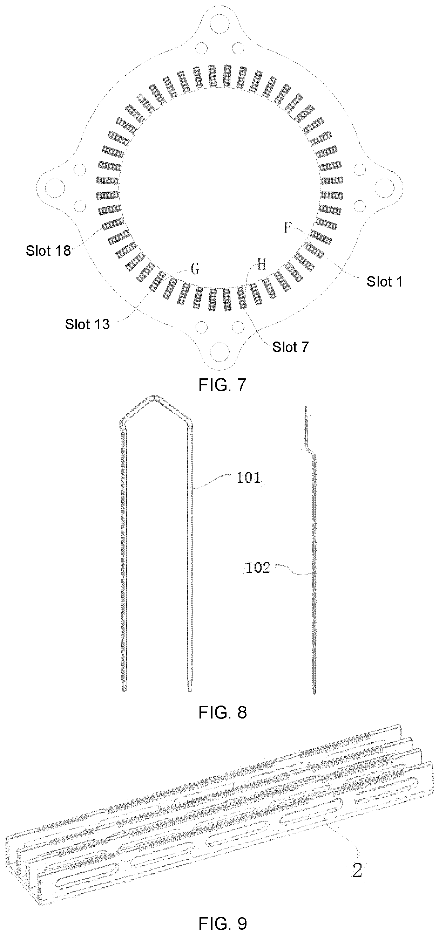

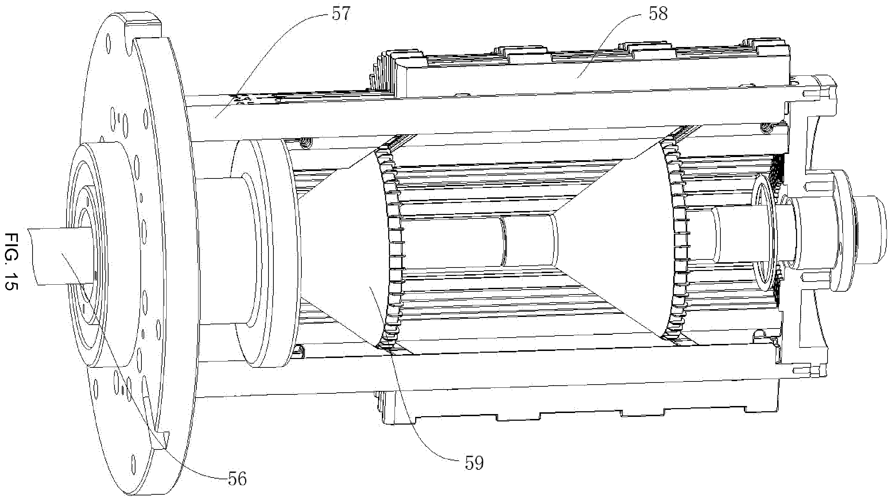

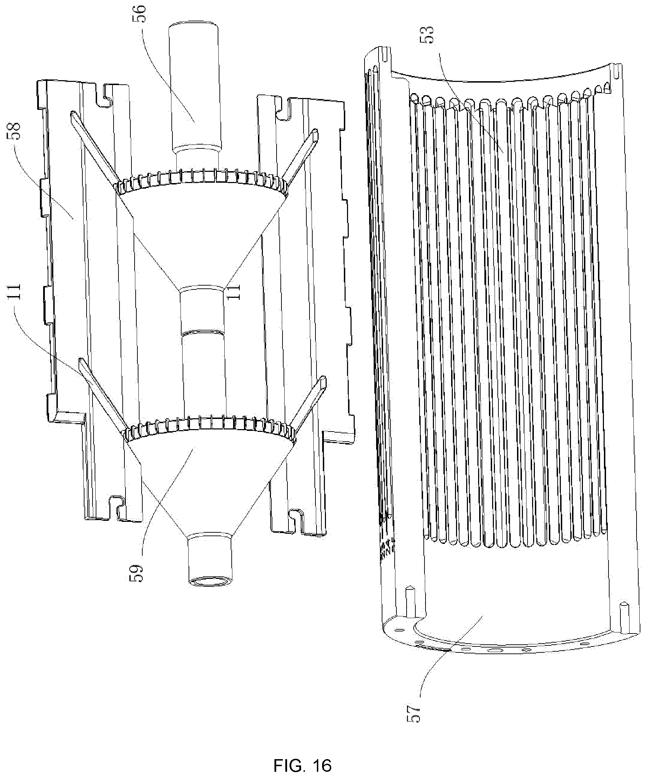

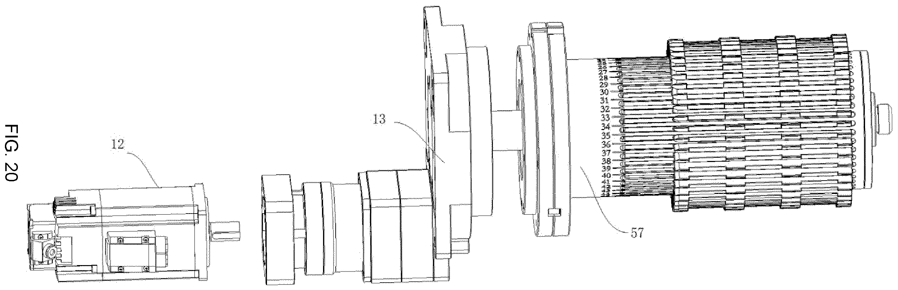

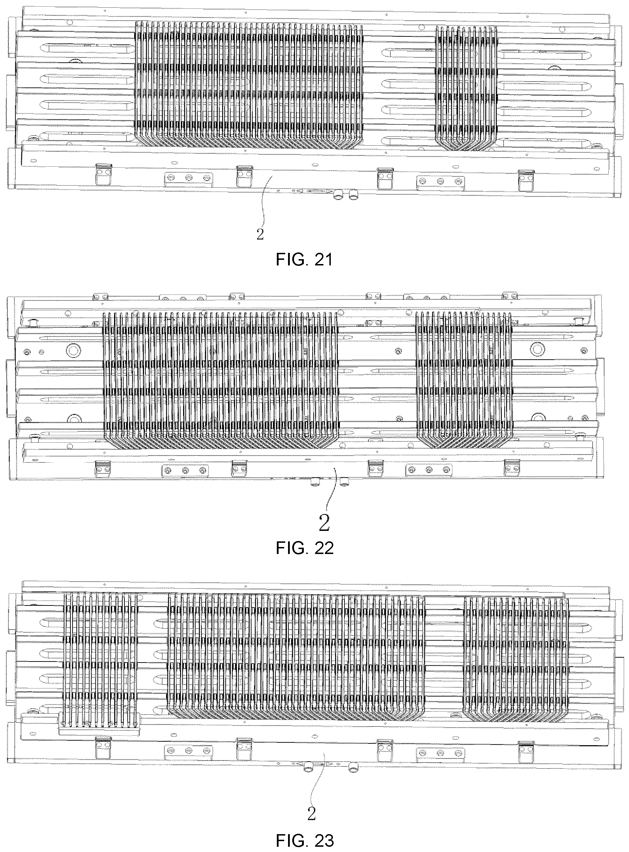

FIG. 1 to FIG. 23 show an automatic wire inserting process for a flat wire stator, including the following steps:
S1: Arrange copper wires in sequence on multiple winding displacement toolings (2) according to a quantity of layers and a quantity of slots of different stator winding structures;
S2: Convey the multiple winding displacement toolings on which the copper wires are arranged to a wire coiling mechanism;
S3: coil by way of the wire coiling mechanism the copper wires arranged on the winding displacement tooling to a winding assembly in sequence, to form a preset winding structure; and
S4: Transfer and insert the preset winding structure into the stator.

In this embodiment, when a stator winding has 48 slots on six layers, the copper wires are arranged in the following manner by way of the following steps:
S1: Arrange three copper wires A and three copper wires B alternately in sequence from right to left on a winding displacement tooling 2 through first winding, where an interval between two straight segments of the copper wires A is spaced apart by six iron core slots, and an interval between two straight segments of the copper wires B is 4 iron core slots;
S2: Overlap and arrange 36 copper wires C in sequence from left to right on a winding displacement tooling 2 through first winding, so that winding displacement of the winding displacement tooling 2 through first winding is completed;
S3: Overlap and arrange 12 copper wires D in sequence from right to left on the winding displacement tooling 2 through second winding, and after the copper wires D are arranged, overlap and arrange 36 copper wires E in sequence from left to right on the winding displacement tooling 2 through second winding, so that winding displacement of the winding displacement tooling 2 through second winding is completed;
S4: According to arrangement manners for the copper wires D and copper wires E, arrange copper wires F and copper wires G on the winding displacement tooling 2 through third winding, where a quantity of the copper wires G is the same as a quantity of the copper wires C; and
S5: Arrange 12 copper wires H one by one on the winding displacement tooling 2 through third winding, so that winding displacement of the winding displacement tooling 2 through third winding is completed.

In this embodiment, the copper wires A, copper wires B, copper wires C, copper wires D, copper wires E, copper wires F, and copper wires G are all U-shaped hairpin copper wires 101, and the copper wires H are I-shaped copper wires 102.

In this embodiment, for example, the stator winding has 48 slots:
when the winding mechanism winds the copper wires A, copper wires B, and copper wires C for one time, the copper wires A are winded from a slot 1 on a first layer of the stator and the winding stops at a slot 12 on the first layer, the copper wires B are winded from a slot 2 on the first layer and the winding stops at a slot 11 on the first layer, and there is no overlap between the copper wires A and copper wires B; and
the copper wires C are winded from a slot 13 on the first layer of the stator, copper wires C in a slot 19 to slot 48 overlap, and the overlapping copper wires C are respectively located on the first layer and a second layer of the stator, and copper wires C located in a slot 1 to slot 6 are disposed on the second layer of the stator.

When the winding mechanism performs second winding, the copper wires D are winded from a slot 1 on a third layer of the stator, where copper wires D located in a slot 7 to slot 12 overlap, and the overlapping D copper wires are located on the second layer and third layer of the stator, and copper wires D located in a slot 13 to slot 18 are disposed on the second layer of the stator.

The copper wires E are winded from a slot 13 on the third layer, copper wires E in a slot 19 to slot 48 overlap, and the overlapping copper wires E are respectively located on a third layer and a fourth layer of the stator, and copper wires E located in a slot 1 to slot 6 are disposed on the fourth layer of the stator.

When the winding mechanism performs third winding, copper wires F are winded from a slot 1 on a fifth layer of the stator, copper wires F in a slot 7 to slot 12 overlap, and the overlapping copper wires are respectively located on a fourth layer and the fifth layer of the stator, and copper wires F located in a slot 13 to slot 18 are disposed on the fourth layer of the stator.

The copper wires G are winded from a slot 13 on a fifth layer of the stator, and the winding stops at a sixth slot on a sixth layer. The copper wires G located in a slot 19 to a slot 48 overlap, and the overlapping copper wires G are respectively located on the fifth layer and the sixth layer of the stator. Copper wires G located in the slot 1 to slot 6 are disposed on the sixth layer of the stator. The copper wires H are winded from a slot 7 on the sixth layer, and the winding stops at a slot 18 on the sixth layer.

In this embodiment, the winding displacement tooling 3 is provided with a wire slot, and the wire slot and the iron core slot are spaced apart from each other.

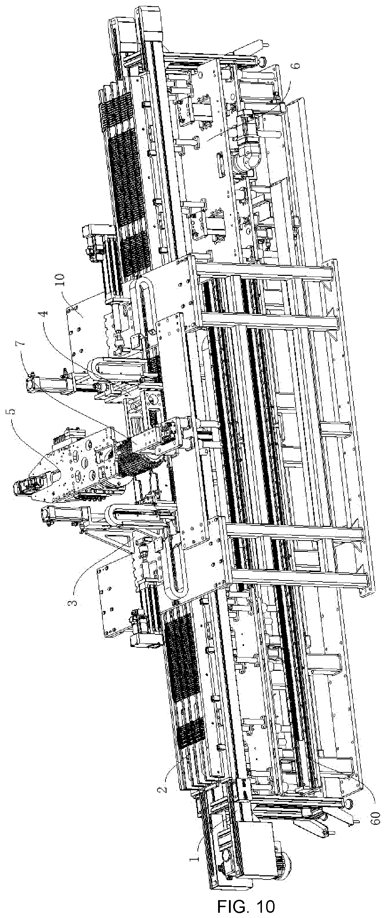

In this embodiment, as shown in FIG. 10 to FIG. 20, the wire coiling mechanism includes the winding displacement tooling 2 disposed on a stator wire coiling device and configured to arrange flat copper wires, a winding mechanism configured to wind the arranged flat copper wires, a flat copper wire conveying mechanism, and a tooling conveying mechanism.

The tooling conveying mechanism is configured to convey the winding displacement tooling 2 to the winding mechanism. The winding mechanism is disposed on a fastening support 10, and the tooling conveying mechanism is disposed below the winding mechanism.

The flat copper wire conveying mechanism is configured to convey, to the winding mechanism for winding, the flat copper wires arranged on the winding displacement tooling 2 conveyed to the winding mechanism. The flat copper wire conveying mechanism is disposed on the fastening support 10 and is distributed on both sides of the winding mechanism.

In this embodiment, the arranged flat copper wires can be conveyed to the winding mechanism for winding through cooperation between the tooling conveying mechanism and the flat copper wire conveying mechanism.

Specifically, with reference to FIG. 10, the tooling conveying mechanism includes a wire body 1 configured to convey the winding displacement tooling 2. The winding displacement tooling 2 includes a winding displacement plate and a tray assembly.

The winding displacement plate is located on the tray assembly, and adjustment assemblies are disposed on both sides of the tray assembly. The adjustment assemblies may push the tray assembly to contact the flat copper wires on the winding displacement plate, so that the flat copper wires are aligned with each other. In use, flat copper wires of different specifications are arranged on the winding displacement plate according to requirements for coiling, and the adjustment assemblies push the tray assembly to contact the flat copper wires on the winding displacement plate, until all two ends of the flat copper wires are aligned with each other. Then, the adjustment assembly is reset, and the tray assembly is reset to no longer contact the flat copper wires, to facilitate subsequent coiling. A sliding belt is disposed on the wire body 1, and the tray assembly is located on the sliding belt. The sliding belt is driven by a driving mechanism, to drive the winding displacement tooling 2 to move as a whole. Specifically, with reference to FIG. 10, the flat copper wire conveying mechanism includes a cable routing part 3 that can slide in a left-right direction and that is configured to convey a flat copper wire on the winding displacement tooling 2 to the winding mechanism, and a conducting wire part 4 that can slide in a left-right direction and that is configured to prevent a flat copper wire winded by the winding mechanism from falling. The cable routing part 3 and the conducting wire part 4 are distributed on a fastening support 10 on both sides of the winding mechanism. The cable routing part 3 includes a wire movement assembly 33 that is configured to convey a flat copper wire on the winding displacement tooling 2 to the winding mechanism, and the wire movement assembly 33 is driven by a first drive assembly for lifting.

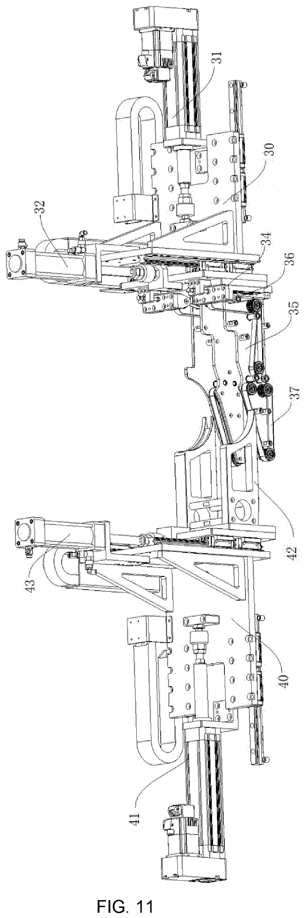

With reference to FIG. 11, the cable routing part 3 includes a first assembly base 30, a first cylinder 31, the first drive assembly, and the wire movement assembly 33. The first drive assembly is a second cylinder 32, the first assembly base 30 is a right-angled plate, and the right-angled plate is divided into a vertical plate and a horizontal plate. The horizontal plate is slidably disposed on the fastening support 10 on both sides of the winding mechanism in a left-right direction. The first cylinder 31 is firmly connected to the fastening support 10 on one side of the cable routing part 3. An output end of the first cylinder 31 is fastened to the horizontal plate and is configured to push the horizontal plate to move toward or opposite to a side of the winding mechanism. The vertical plate is disposed at one end that is of the horizontal plate and that faces the winding mechanism. An upper end of the vertical plate is firmly connected to the second cylinder 32 whose output end is downward. The wire movement assembly 33 is firmly connected to the output end of the second cylinder 32, and the wire movement assembly 33 is slidably disposed on the vertical plate. It is ensured that the wire movement assembly 33 is moved more stably. The second cylinder 32 can adjust a height position of the wire movement assembly 33 in a vertical direction, to adapt to a position of the winding mechanism and facilitate precise cooperation with the winding mechanism.

With referenced to FIG. 11, a conducting wire part 4 includes a second assembly base 40, a third cylinder 41, a conducting wire block 42, and a second drive assembly. The second assembly base 40 is a right-angled plate that has a same shape as the first assembly base 30. The second drive assembly is a fourth cylinder 43. A manner in which the second assembly base 40, the third cylinder 41, and the fourth cylinder 43 are disposed is the same as a manner in which the first assembly base 30, the first cylinder 31, and the second cylinder 32 are disposed. However, the conducting wire part 4 and the cable routing part 3 are symmetrically distributed around the winding mechanism, and there are differences. The conducting wire block 42 is firmly connected to an output end of the second cylinder 32, and the conducting wire block 42 is slidably disposed on a vertical plate of the second assembly base 40 that has a right-angled plate shape, to ensure that the conducting wire block 42 slides stably. Through cooperation between the third cylinder 41 and the fourth cylinder 43, the conducting wire block 42 can be disposed at an optimal working position of the winding mechanism. A function of the conducting wire block 42 is to prevent a flat copper wire from falling off when the winding mechanism winds the flat copper wire; a surface on which the conducting wire block 42 cooperates with the winding mechanism is set to an arc-shaped surface that has a same radian as a rotation track of the winding mechanism, and an upper end of the arc-shaped surface is higher than a horizontal plane of a shaft center of the winding mechanism, so that the arc-shaped surface can be more closely attached to the winding mechanism.

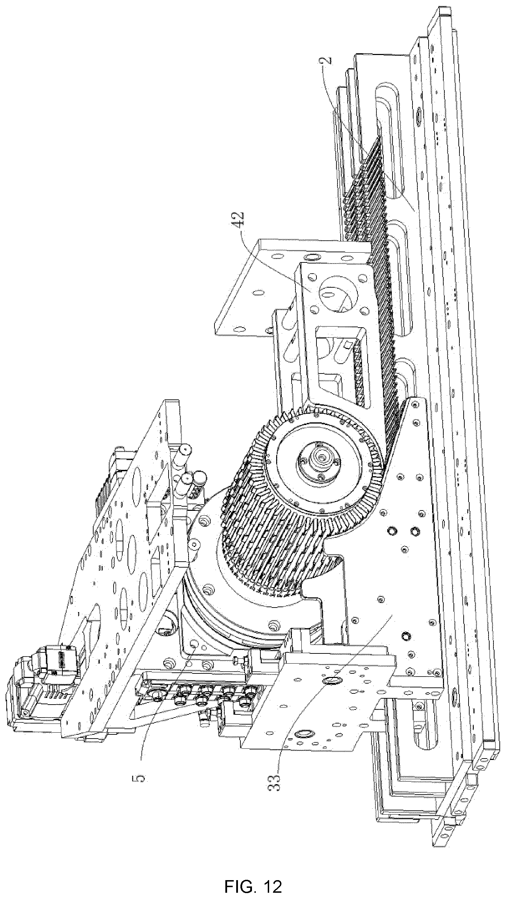

With reference to FIG. 11 and FIG. 12, there are two groups of wire movement assemblies 33. Each group of wire movement assemblies 33 includes a sliding plate 34, two baffle plates 35, a first motor 36, and a conveying belt 37. A side that is of the baffle plate 35 and that faces the winding mechanism is also disposed as an arc-shaped surface. The sliding plate 34 is slidably disposed on a horizontal plate of the first assembly base 30 that has a right-angled plate shape. The first motor 36 and the conveying belt 37 are both disposed between the two baffle plates 35. The first motor 36 drives the conveying belt 37 to move through cooperation of a roller. The conveying belt 37 is tilted as a whole, and one end that is of the conveying belt 37 and that faces the sliding plate 34 is higher than the other end. A transition part between an upper end of the conveying belt 37 and an arc-shaped surface on the baffle plate 35 is ensured to be flat, thereby better conveying the flat copper wire.

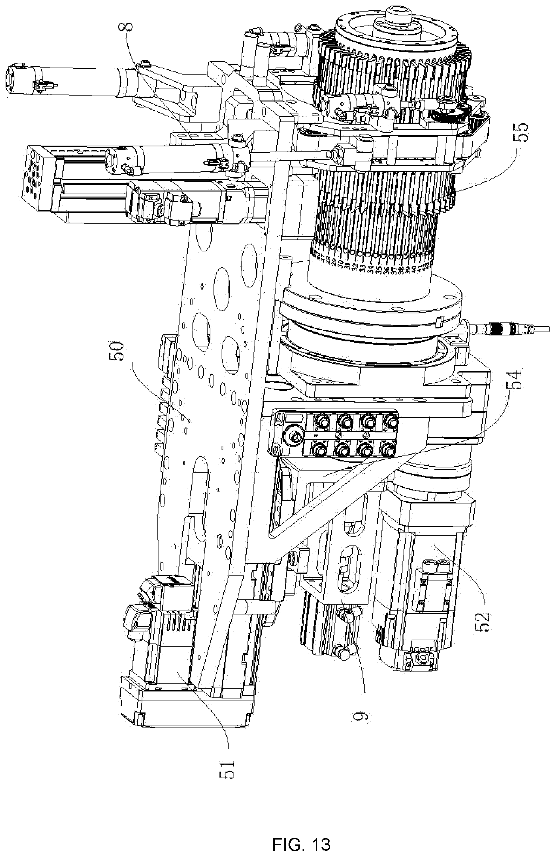

Specifically, with reference to FIG. 12 and FIG. 13, a stator wire coiling device further includes a positioning part 7 that is configured to mount the winding mechanism. The positioning part 7 is configured to adjust a position of the winding mechanism. The winding mechanism further includes a wire coiling part 5. The wire coiling part 5 includes a winding assembly 55 that is configured to perform winding on the flat copper wires, and the wire coiling part 5 is detachably mounted on a mechanical arm. During wire coiling, the mechanical arm places the wire coiling part 5 at a winding position. After wire coiling is completed, the mechanical arm directly transfers the wire coiling part 5 to a corresponding working position in a subsequent flat copper wire processing process. The winding assembly 55 is driven by a third driving mechanism. An inner diameter and an outer diameter of the winding assembly 55 are variable. The winding assembly 55 includes a sleeve 57 provided with multiple slots 53. Two ends of the sleeve 57 are firmly connected to a cover plate. Each slot 53 is slidably connected to an insert 58 in a height direction of the slot 53. The multiple inserts 58 and the slot 53 are distributed in an annular array, and space for winding flat copper wires is formed between the two inserts 58. At least two umbrella-shaped members 59 for driving the inserts 58 to slide are slidably disposed in an axial direction of the sleeve 57. The umbrella-shaped members 59 are fastened on a rotating shaft 56 that overlaps an axis of the sleeve 57. One side that is of the insert 58 and that faces the rotating shaft 56 is provided with a sliding groove 11 inclined at a specific angle. One end that is of the umbrella-shaped member 59 and that has a large opening is firmly connected to an extension rod inserted and connected in the sliding groove 11. Two ends of the rotating shaft 56 are slidably connected to two cover plates, thereby changing a position of the insert 58 in the slot 53, and further changing an outer diameter formed by the insert 58.

With reference to FIG. 12 and FIG. 13, the wire coiling part 5 further includes a mounting base 50, a fifth cylinder 51, a fourth driving mechanism 52, a locking assembly 9, and a sliding base 54. The mounting base 50 is operated and controlled by the mechanical arm for dismantling and mounting the wire coiling part 5. The fourth driving mechanism 52 includes a servo motor 12 and a hollow speed reducer 13. An input shaft of the hollow speed reducer 13 is firmly connected to an output shaft of the servo motor 12. An output end of the hollow speed reducer 13 is fastened to a cover plate that is of the winding assembly 55 and that faces a side of the fifth cylinder 51, so that the servo motor 12 can drive, by using the hollow speed reducer 13, the sleeve 57 to rotate.

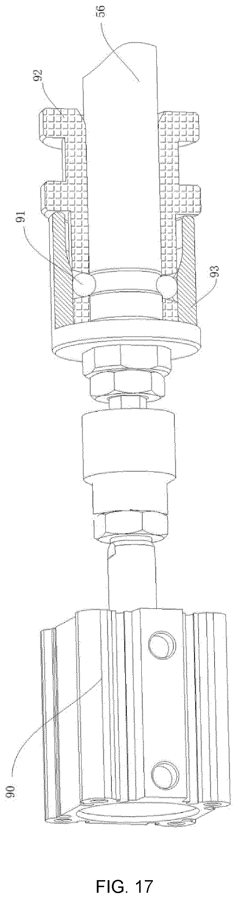

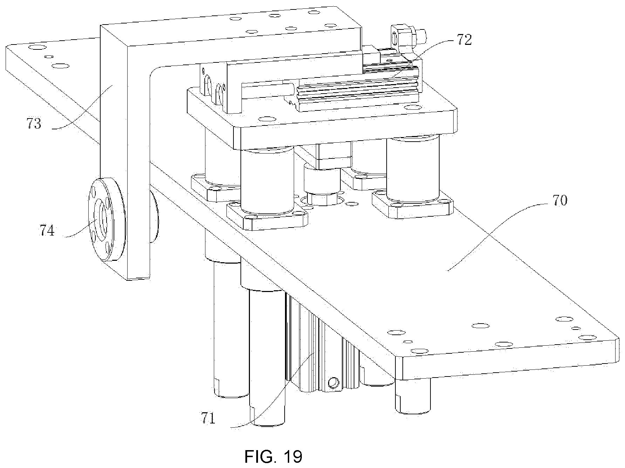

With reference to FIG. 17 and FIG. 19, the sliding base 54 is slidably connected to a lower end of the mounting base 50 in a front-back direction. The locking assembly 9 is disposed on the sliding base 54. The locking assembly 9 includes a ninth cylinder 90, a steel ball 91, an adapter 92, and a sliding sleeve 93. The fifth cylinder 51 is firmly connected to a rear end of the mounting base 50. An output end of the fifth cylinder 51 is fastened to the sliding base 54, and is configured to drive the sliding base 54 to slide back and forth. A central part of the sliding base 54 is firmly connected to the adapter 92. The rotating shaft 56 penetrates the cover plate and is rotatably connected to an inner side surface of the adapter 92. The other end of the rotating shaft 56 is slidably connected to a hollow barrel. The hollow barrel is fastened to an inner side of a cover plate that is of the sleeve 57 and that is away from the adapter 92, so that the rotating shaft 56 can more stably support the winding assembly 55. The ninth cylinder 90 is firmly connected to the sliding base 54, and the sliding sleeve 93 is sleeved on an outer side of the adapter 92. One end that is of the sliding sleeve 93 and that is away from the adapter 92 is fastened to an output end of the ninth cylinder 90. Shaft centers of the rotating shaft 56, the sliding sleeve 93, and the adapter 92 are all on a same axis. The adapter 92 penetrates the sliding base 54. The sliding sleeve 93 is sleeved on one end of the adapter 92, and the rotating shaft 56 is inserted into an inner side of the other end of the adapter 92. In this case, it can be ensured that the rotating shaft 56 slides back and forth reciprocatingly in a front-back direction, and the rotating shaft 56 can also rotate along with the sleeve 57, and one side that is of the adapter 92 and that faces one side of the sliding sleeve 93 is movably connected to the steel ball 91. One end that is of the rotating shaft 56 and that faces the sliding sleeve 93 is provided with an annular groove for rolling of the steel ball 91. A rear end of the inner side surface of the sliding sleeve 93 is provided with a protrusion for compressing the steel ball 91, so that the steel ball 91 penetrates the adapter 92 and is inserted into the annular groove at the end of the rotating shaft 56.

With this disposing, when the winding assembly needs to be removed, the ninth cylinder 90 retracts and the sliding sleeve 93 is recovered from the adapter 92. When the rotating shaft 56 is extracted from the adapter 92, most of the steel ball 91 is squeezed into the sliding sleeve 93 through the adapter 92, so that the winding assembly 55 can be quickly dismantled.

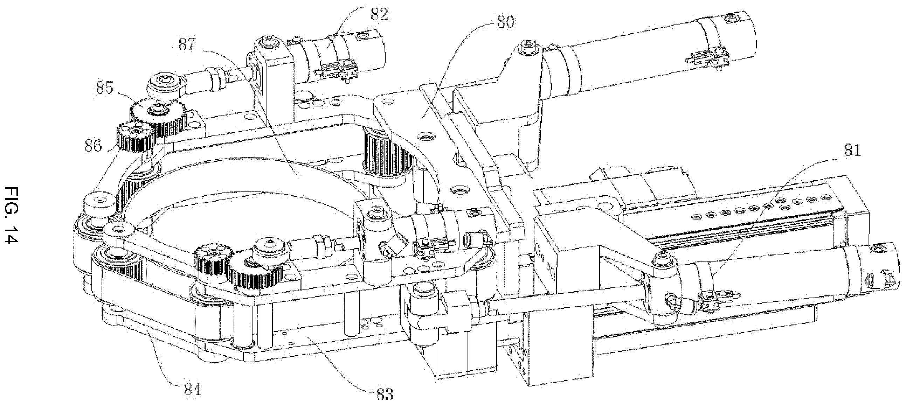

Specifically, with reference to FIG. 14, the winding mechanism also includes a wire-holding assembly 8 for tightly holding the winding assembly 55 that has winded the flat copper wires. The wire-holding assembly 8 includes a base 80, a first mounting block symmetrically firmly connected to an upper end surface of the mounting base 50, a tenth cylinder 81 hinged on the first mounting block, a first swing arm 83 rotatably connected to both sides of a bottom of the base 80, a second swing arm 84 rotatably connected to an end that is of the first swing arm 83 and that is away from the base 80, a second mounting block firmly connected to the second swing arm 84, an eleventh cylinder 82 hinged on the second mounting block, a driving gear 85, a driven gear 86, and a belt 87. The base 80 is disposed on a lower end surface of the mounting base 50.

An output end of the tenth cylinder 81 is rotatably connected to the first swing arm 83. The driving gear 85 is rotatably disposed at an end that is of the first swing arm 83 and that is away from the base 80. The driven gear 86 is rotatably connected to a hinge position between the first swing arm 83 and the second swing arm 84. A shaft center of the driven gear 86 is the same as a shaft center of the first swing arm 83 and the second swing arm 84. The driving gear 85 and the driven gear 86 are meshed. A connecting post is disposed on the center of a circle that is of a disk of the driving gear 85 in a radial direction away from the driving gear 85. An output end of the eleventh cylinder 82 is rotatably connected to the connecting post. An end of the belt 87 is firmly connected to a side that is of the second swing arm 84 and that is opposite to the center of the winding assembly 55. When the tenth cylinder 81 and the eleventh cylinder 82 drive the first swing arm 83 and the second swing arm 84 to hold the winding assembly 55 tightly, the belt 87 is just wrapped around an outer side surface of the winding assembly 55, to prevent the flat copper wire from falling off.

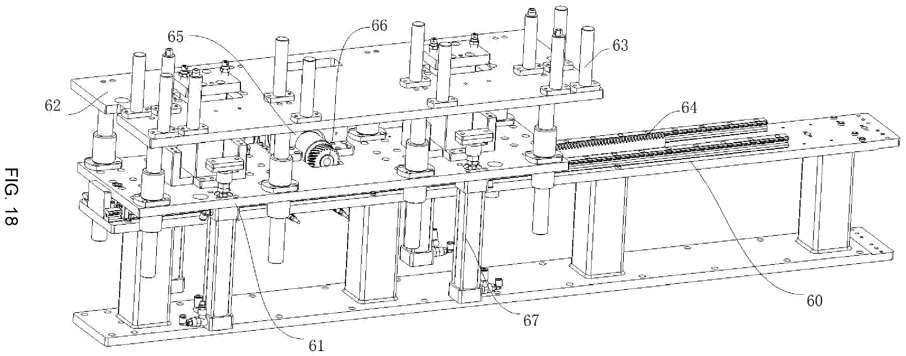

Specifically, with reference to FIG. 18, the tooling conveying mechanism further includes a lifting part 6 that can slide in a left-right direction and that is configured to lift the winding displacement tooling 2, and is configured to precisely convey the flat copper wires on the winding displacement tooling 2 to the winding assembly 55 for winding. The lifting part 6 includes a bottom frame, a sliding rail 60 symmetrically and firmly connected to the bottom frame, a sliding plate 61 that is slidably connected to the sliding rail 60, a horizontally disposed plate 62 that is slidably disposed on the sliding plate 61, a positioning rod 63 that is firmly connected to the horizontally disposed plate 62, a rack 64 that is firmly connected to the bottom frame, a third motor 65 that is firmly connected to the sliding plate 61, a first gear 66 that is firmly connected to an output shaft of the third motor 65, and a sixth cylinder 67 that is firmly connected to a lower end surface of the sliding plate 61. An output shaft of the sixth cylinder 67 penetrates the sliding plate 61 and is configured to drive the horizontally disposed plate 62 to slide upward. The first gear 66 is meshed with the rack 64, and the third motor 65 is configured to drive the first gear 66 to rotate. With the cooperation of the first gear 66 and the rack 64, the sliding plate 61 performs linear reciprocating motion along the sliding rail 60. When the winding displacement tooling 2 slides along the wire body 1 in a direction close to the wire coiling part 5, the sixth cylinder 67 lifts the horizontally disposed plate 62, so that the positioning rod 63 lifts the winding displacement tooling 2 to be detached from the wire body 1. The horizontally disposed plate 62 slides along the sliding rail 60 and approaches the wire coiling part 5. To improve working efficiency, the other top lifting part 6 may continue to convey the winding displacement tooling 2, and the previous lifting part 6 continues to receive a new winding displacement tooling 2, to ensure continuous winding.

Specifically, as shown in FIG. 12, FIG. 15, and FIG. 16, a fastening plate 70 is firmly connected to the fastening support 10 at a front end of the winding assembly 55, a lower end of the fastening plate 70 is firmly connected to a seventh cylinder 71, and an output end of the seventh cylinder 71 penetrates the fastening plate 70 and is firmly connected to a transition plate. An eighth cylinder 72 is firmly connected to the transition plate, to adjust an entire height and front-back position of the wire coiling part 5, so that the wire coiling part 5 can be located in a center of the flat copper wire conveying mechanism, and the winding assembly 55 can better cooperate with an arc-shaped surface on the cable routing part 3 and the conducting wire part 4, thereby effectively preventing the flat copper wire from falling off. An output end of the eighth cylinder 72 faces the winding assembly 55 and is firmly connected to a movable block 73. One end that is of the movable block 73 and that faces the winding assembly 55 is rotatably connected to an alignment block 74 that is configured to clamp a cover plate that is on a side of the sleeve 57 and that faces the movable block 73. One side that is of the alignment block 74 and that faces the winding assembly 55 is provided with at least two groove bodies. The cover plate on one side that is of the sleeve 57 and that faces the movable block 73 is provided with at least two inserts distributed in a same manner as that for the groove bodies. When the wire coiling part 5 is placed on the fastening support 10, the seventh cylinder 71 lifts the fastening plate 70, and the eighth cylinder 72 adjusts a position height of the alignment block 74. Then, the eighth cylinder 72 pushes the movable block 73 to approach the wire coiling part 5, so that the groove body is sleeved on the insert, thereby implementing clamping the alignment block 74 and the cover plate. Therefore, the wire coiling part 5 is centered through control of the seventh cylinder 71 and the eighth cylinder 72, to ensure that the wire coiling part 5 is at a correct winding position and ensure a subsequent winding effect.

Working principle of the wire coiling mechanism: First, the flat copper wires are arranged on the winding displacement tooling 2 by using the mechanical arm, and the winding displacement tooling is conveyed by using the wire body 1. After the winding displacement tooling 2 is conveyed to a specific position, the sixth cylinder 67 is extended, to raise the winding displacement tooling 2. After the winding displacement tooling is raised to a specific position, the third motor 65 is started, to drive the first gear 66 to rotate. With the cooperation of the rack 64, the sliding plate 61 drives the lifting part 6 to slide along the sliding rail 60 to a lower end of the winding assembly 55. A position of the winding assembly 55 is adjusted by using the positioning part 7, the conducting wire part 4, and the cable routing part 3, so that the insert 58 in the winding assembly 55 can be attached to the arc-shaped surface. Then, the first motor 36 in the cable routing part 3 starts working, and the servo motor 12 is also started, so that the conveying belt 37 drives the flat copper wire to be conveyed to the winding assembly 55, and the winding assembly 55 winds the flat copper wire. After the arc-shaped surface is disposed and the winding assembly 55 performs winding in one circle, the flat copper wire does not fall off from a gap between two inserts 58, and the wire-holding assembly 8 is started, so that the tenth cylinder 81 is extended to drive the first swing arm 83 to rotate, and the eleventh cylinder 82 performs a reciprocating and retracting action, so that the eleventh cylinder 82 drives the driving gear 85 to rotate, the driving gear 85 drives the driven gear 86 to rotate, and the second swing arm 84 is rotated. In addition, the belt 87 is winded on an outer side of the winding assembly 55, to further prevent the flat copper wire from falling off. After the holding is completed, the mechanical arm directly transfers the wire coiling part 5 to a wire plugging position during stator processing, the wire-holding assembly 8 is loosened, so that a winded flat copper wire is inserted into a wire inserting tooling in a corresponding wire plugging position, and then the other mechanical replaces the wire coiling part 5 with a next wire coiling part 5.

When the wire coiling part 5 is replaced with a next wire coiling part 5, the other mechanical arm operates and controls a side that is of the wire coiling part 5 and that faces a side of the positioning part 7 to be inserted into the alignment block 74, to complete mounting of the wire coiling part 5. Then, a height and a position in a front-back direction of the wire coiling part 5 are respectively adjusted by using the seventh cylinder 71 and the eighth cylinder 72, to facilitate cooperation between the winding assembly 55, the cable routing part 3, the conducting wire part 4, the lifting part 6, and the winding displacement tooling 2. The two mechanical arms work alternately, and the wire coiling part 5 does not need to be frequently replaced.

When a position of the insert 58 in the slot 53 is adjusted, the fifth cylinder 51 is controlled to extend and retract, to push the sliding base 54 to slide along the mounting base 50, so that the mounting base 50 drives the adapter 92 to slide. Further, the adapter 92 drives the rotating shaft 56 to slide, so that the rotating shaft 56 drives the umbrella-shaped member 59 to slide, to adjust a length of the extension rod in the sliding groove 11, and further adjust a position of the insert 58 in the slot 53, thereby changing an outer diameter of the winding assembly 55.

All the foregoing electronic components are commonly used electronic components in the conventional technologies. For control manners for the foregoing electronic components, actions are performed by using industrial personal computers.

Although the present invention is described in detail with reference to the foregoing embodiments, a person skilled in the art may still modify the technical solutions described in the foregoing embodiments, or perform equivalent replacement on some of the technical features. Any modification, equivalent replacement, improvement, or the like performed within the spirit and principles of the present invention shall fall within the protection scope of the present invention as claimed.

## Claims

1. An automatic wire inserting process for a flat wire stator, **characterized by** comprising the following steps:
S1: arranging copper wires in sequence on multiple winding displacement toolings (2) according to a quantity of layers and a quantity of slots of different stator winding structures;
S2: conveying the multiple winding displacement toolings (2) on which the copper wires are arranged to a wire coiling mechanism;
S3: coiling by way of the wire coiling mechanism the copper wires arranged on the winding displacement tooling (2) to a winding assembly in sequence, to form a preset winding structure; and
S4: transferring and inserting the preset winding structure into the stator.

2. The automatic wire inserting process for a flat wire stator according to claim 1, **characterized in that** when a stator winding has 48 slots on six layers, the copper wires are arranged in the following manner by way of the following steps:
S1: arranging three copper wires A and three copper wires B alternately in sequence from right to left on a winding displacement tooling (2) through first winding, wherein an interval between two straight segments of the copper wires A is spaced apart by six iron core slots, and an interval between two straight segments of the copper wires B is 4 iron core slots;
S2: overlapping and arranging 36 copper wires C in sequence from left to right on the winding displacement tooling (2) through first winding, so that winding displacement of the winding displacement tooling (2) through first winding is completed;
S3: overlapping and arranging 12 copper wires D in sequence from right to left on the winding displacement tooling (2) through second winding, and, after the copper wires D are arranged, overlapping and arranging 36 copper wires E in sequence from left to right on the winding displacement tooling (2) through second winding, so that winding displacement of the winding displacement tooling (2) through second winding is completed;
S4: according to arrangement manners for the copper wires D and copper wires E, arranging copper wires F and copper wires G on the winding displacement tooling (2) through third winding, wherein a quantity of the copper wires G is the same as a quantity of the copper wires C; and
S5: arranging 12 copper wires H one by one on the winding displacement tooling (2) through third winding, so that winding displacement of the winding displacement tooling (2) through third winding is completed.

3. The automatic wire inserting process for a flat wire stator according to claim 2, **characterized in that** the copper wires A, copper wires B, copper wires C, copper wires D, copper wires E, copper wires F, and copper wires G are all U-shaped hairpin copper wires (101), and the copper wires H are I-shaped copper wires (102).

4. The automatic wire inserting process for a flat wire stator according to claim 3, **characterized in that** when the stator winding has 48 slots on six layers, and the wire coiling mechanism performs winding for one time, the copper wires A are winded from a slot 1 on a first layer of the stator and the winding stops at a slot 12 on the first layer, the copper wires B are winded from a slot 2 on the first layer and the winding stops at a slot 11 on the first layer, and there is no overlap between the copper wires A and copper wires B.

5. The automatic wire inserting process for a flat wire stator according to claim 4, **characterized in that** the copper wires C are winded from a slot 13 on the first layer of the stator, copper wires C in a slot 19 to slot 48 overlap, and the overlapping copper wires C are respectively located on the first layer and a second layer of the stator, and copper wires C located in a slot 1 to slot 6 are disposed on the second layer of the stator.

6. The automatic wire inserting process for a flat wire stator according to claim 5, **characterized in that** when the winding mechanism performs second winding, the copper wires D are winded from a slot 1 on a third layer of the stator, wherein copper wires D located in a slot 7 to slot 12 overlap, and the overlapping D copper wires are located on the second layer and third layer of the stator, and copper wires D located in a slot 13 to slot 18 are disposed on the second layer of the stator.

7. The automatic wire inserting process for a flat wire stator according to claim 5, **characterized in that** the copper wires E are winded from a slot 13 on the third layer, copper wires E in a slot 19 to slot 48 overlap, and the overlapping copper wires E are respectively located on a third layer and a fourth layer of the stator, and copper wires E located in a slot 1 to slot 6 are disposed on the fourth layer of the stator.

8. The automatic wire inserting process for a flat wire stator according to claim 1, **characterized in that** when the winding mechanism performs third winding, copper wires F are winded from a slot 1 on a fifth layer of the stator, copper wires F in a slot 7 to slot 12 overlap, and the overlapping copper wires are respectively located on a fourth layer and the fifth layer of the stator, and copper wires F located in a slot 13 to slot 18 are disposed on the fourth layer of the stator.

9. The automatic wire inserting process for a flat wire stator according to claim 7, **characterized in that** the copper wires G are winded from a slot 13 on a fifth layer of the stator, the winding stops at a sixth slot on a sixth layer, the copper wires G located in a slot 19 to a slot 48 overlap, the overlapping copper wires G are respectively located on the fifth layer and the sixth layer of the stator, copper wires G located in the slot 1 to slot 6 are disposed on the sixth layer of the stator, the copper wires H are winded from a slot 7 on the sixth layer, and the winding stops at a slot 18 on the sixth layer.

10. The automatic wire inserting process for a flat wire stator according to claim 1, **characterized in that** the wire coiling mechanism comprises the winding displacement tooling (2) disposed on a stator winding device and configured to arrange flat copper wires, a winding mechanism configured to wind the arranged flat copper wires, a flat copper wire conveying mechanism, and a tooling conveying mechanism;
the tooling conveying mechanism being configured to convey the winding displacement tooling (2) to the winding mechanism; and
the flat copper wire conveying mechanism being configured to convey, to the winding mechanism for winding, the flat copper wires arranged on the winding displacement tooling (2) conveyed to the winding mechanism.
